# FASCICULE DE BREVET EUROPEEN

(11) **EP 1 076 072 B1**
(45) Date de publication et mention de la délivrance du brevet: **18.06.2003**
(21) Numéro de dépôt: 00402141.6
(22) Date de dépôt: 26.07.2000
(51) Int. Cl.: C08G 65/20, C08G 18/48, C10L 1/18

(54) **Compositions détergentes pour carburants de type essence contenant des derives de polytetrahydrofuranne.**
Reinigungsmittelzusammensetzungen für Benzin enthaltend Polytetrahydrofuran-Derivate
Detergent compositions for gasoline-type fuels containing polytetrahydrofuran

(30) Priorité: 12.08.1999 FR 9910506
(43) Date de publication de la demande: 14.02.2001
(73) Titulaire: Institut Francais du Petrole, 92852 Rueil Malmaison Cedex (FR)
(72) Inventeur: Delfort, Bruno, 75005 Paris (FR); Joly, Stéphane, 78380 Bougival (FR); Lacome, Thierry, 92380 Garches (FR); Gateau, Patrick, 78310 Maurepas (FR); Paille, Fabrice, 78520 Limay (FR)

(56) Documents cités:
- DE-A- 3 210 283
- US-A- 3 382 055
- US-A- 4 211 854
- US-A- 5 741 946
- PATENT ABSTRACTS OF JAPAN vol. 011, no. 242 (C-438), 7 août 1987 (1987-08-07) & JP 62 050321 A (MITSUBISHI YUKA FINE CHEM CO LTD), 5 mars 1987 (1987-03-05)
- CHEMICAL ABSTRACTS, vol. 104, no. 6, février 1986 (1986-02) Columbus, Ohio, US; abstract no. 35278q, OZAWA S. ET AL: "Polyurethane elastomers" page 68; XP002135153 & JP 60 135421 A (ASAHI GLASS CO.) 18 juillet 1985 (1985-07-18)

## Description

L'invention concerne de nouvelles compositions d'additifs détergents pour les carburants de type essence et les compositions de carburants les contenant, seuls ou en mélanges avec d'autres additifs détergents.

On sait que les moteurs d'automobiles ont tendance à former des dépôts à la surface des éléments du moteur en particulier sur les orifices du carburateur, le corps des papillons, les injecteurs de carburant, les orifices et les soupapes d'admission, en raison de l'oxydation et de la polymérisation de divers constituants hydrocarbonés du carburant. Ces dépôts, même lorsqu'ils ne sont présents qu'en faibles quantités, sont souvent responsables de problèmes de conduite importants, tels que le calage du moteur et des défaillances à l'accélération. De plus, les dépôts dans le moteur peuvent accroître de manière importante la consommation de carburant et la production d'émissions polluantes. C'est pourquoi, le développement d'additifs détergents efficaces pour réguler ces dépôts revêt une importance considérable et a déjà fait l'objet de nombreuses recherches.

On a maintenant découvert une nouvelle famille de composés qui présentent une bonne efficacité comme additifs destinés à réduire les dépôts sur les injecteurs et sur les soupapes d'admission.

Les compositions d'additifs détergents pour carburants de type essence de l'invention comprennent au moins un composé répondant à la formule générale suivante (I) : 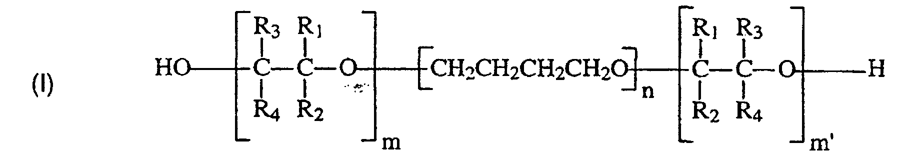 dans laquelle R1, R2, R3 et R4, représentent chacun un atome d'hydrogène ou un radical hydrocarboné, par exemple alkyle, de 1 à 30 atomes de carbone l'un au moins des R1, R2, R3 et R4 étant un radical hydrocarboné ; n est un nombre de 1 à 20, de préférence de 1 à 10, m et m' sont chacun un nombre de 1 à 30, de préférence de 1 à 10, avec m + m' de 4 à 60, de préférence de 5 à 30.

Dans la même formule, les enchaînements : 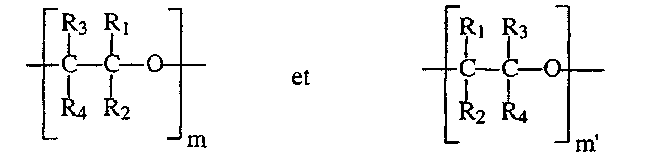 peuvent être constitués respectivement de motifs : 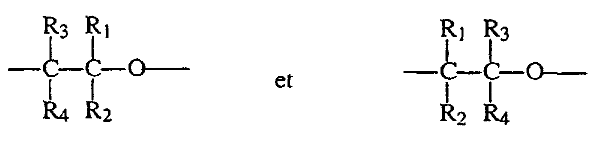 qui diffèrent entre eux par la nature de R1, R2, R3 et/ou R4.

Les composés utilisés dans l'invention se présentent en général sous la forme de mélanges de composés qui diffèrent les uns des autres par la valeur de n, m et/ou m' et/ou par la nature des radicaux R1, R2, R3, R4. Plutôt que de composés, on peut alors parler de compositions.

La synthèse des composés ou des compositions défini(e)s ci-dessus peut être effectuée comme décrit ci-après.

Dans une première étape, on réalise la polymérisation du tétrahydrofuranne, selon une procédure connue et décrite par exemple dans l'ouvrage de P. Dreyfuss (Polytetrahydrofuran, Gordon and Beach Science Publishers, New York, 1982) en présence d'un catalyseur acide, de manière à obtenir un polytétrahydrofuranne de formule générale (II) :

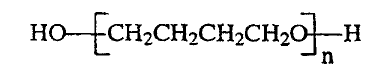

Les polytétrahydrofurannes considérés peuvent avoir une masse molaire moyenne de 200 à 3000.

On fait ensuite réagir le polytétrahydrofuranne formé avec un ou plusieurs composés présentant une fonction époxyde, de formule générale (III) : 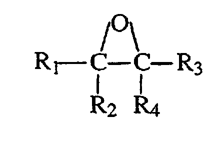 dans laquelle R1, R2, R3 et R4, représentent un atome d'hydrogène ou un radical hydrocarboné, par exemple alkyle, de 1 à 30 atomes de carbone, l'un au moins des R1, R2, R3 et R4 étant un radical hydrocarboné.

Les conditions de la réaction sont en général les suivantes :

Le polytétrahydrofuranne est mélangé par exemple à de l'hydrure de sodium (à raison par exemple d'environ 0,4% en poids). Après avoir purgé, sous agitation, le réacteur de l'hydrogène dégagé, on introduit l'époxyde ou un mélange d'époxydes en une quantité calculée pour obtenir la valeur désirée de m+m', à une température de 80 à 180 °C et on maintient le mélange réactionnel à cette température jusqu'à la fin de la consommation du (ou des) époxyde(s). Après retour à la température ambiante, on dilue le milieu avec un solvant organique, par exemple hydrocarboné, tel que l'heptane, on le lave à l'eau une ou plusieurs fois, puis, après évaporation sous pression réduite de la phase organique, on obtient le produit recherché qui répond à la formule générale (I).

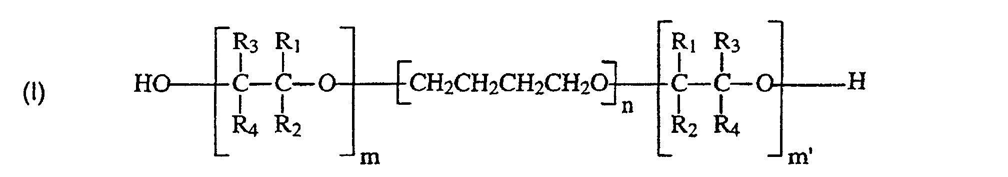

Dans l'invention, les compositions d'additifs détergents telles que définies ci-dessus peuvent être ajoutées aux carburants de type essence à des concentrations par exemple de 20 à 5000 mg/litre. Elles peuvent être aussi utilisées en mélange avec tout autre composé détergent.

Les exemples suivants illustrent l'invention sans en limiter la portée.

### Exemple 1

Dans un réacteur permettant d'opérer sous pression, équipé d'un système d'agitation, d'un système d'introduction de réactifs, d'un système de mesure de la température et de la pression, on introduit 50 g d'un polytétrahydrofuranne de masse molaire moyenne égale à 250 et 0,2 g d'hydrure de sodium. Après avoir purgé, sous agitation, le réacteur de l'hydrogène dégagé, on introduit 235 g (3,26 moles) de 1,2-époxybutane. On porte progressivement le milieu à la température de 145 °C et on le maintient à cette température jusqu'à ce que la chute de pression indique la fin de la consommation de 1,2-époxybutane. Après retour à la température ambiante, le milieu est dilué avec de l'heptane, lavé avec 2 fois 50 g d'eau, puis, après évaporation sous pression réduite de la phase organique, on obtient 275 g d'un liquide limpide jaune pâle, soluble dans l'essence et dont la structure correspond à la formule générale : 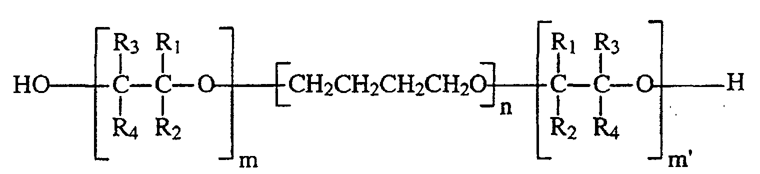 dans laquelle
R1 = R2 = R3 = H ; R4 = -CH2-CH3 ;
n _{moyen} = 3,5 et (m + m') _{moyen} = 16.

### Exemple 2

Dans un réacteur permettant d'opérer sous pression, équipé d'un système d'agitation, d'un système d'introduction de réactifs, d'un système de mesure de la température et de la pression, on introduit 50 g d'un polytétrahydrofuranne de masse molaire moyenne égale à 250 et 0,2 g d'hydrure de sodium. Après avoir purgé, sous agitation, le réacteur de l'hydrogène dégagé, on introduit 160 g (2,22 moles) de 1,2-époxybutane. On porte progressivement le milieu à la température de 145 °C et on le maintient à cette température jusqu'à ce que la chute de pression indique la fin de la consommation de 1,2-époxybutane. Après retour à la température ambiante, le milieu est dilué avec de l'heptane, lavé avec 2 fois 50 g d'eau, puis, après évaporation sous pression réduite de la phase organique, on obtient 205 g d'un liquide limpide jaune pâle, soluble dans l'essence et dont la structure correspond à la formule générale 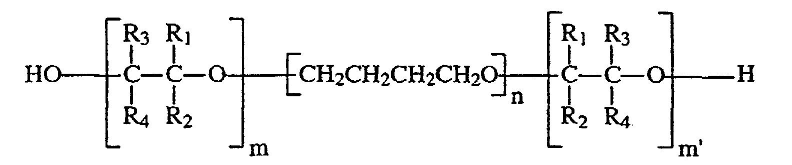 dans laquelle
R1 = R2 = R3 = H ; R4 = -CH2-CH3 ;
n _{moyen} = 3,5 et (m+m') _{moyen} = 11.

### Exemple 3

Dans un réacteur permettant d'opérer sous pression, équipé d'un système d'agitation, d'un système d'introduction de réactifs, d'un système de mesure de la température et de la pression, on introduit 50 g d'un polytétrahydrofuranne de masse molaire moyenne égale à 250 et 0,2 g d'hydrure de sodium. Après avoir purgé, sous agitation, le réacteur de l'hydrogène dégagé, on introduit 290 g (4,02 moles) de 1,2-époxybutane. On porte progressivement le milieu à la température de 145 °C et on le maintient à cette température jusqu'à ce que la chute de pression indique la fin de la consommation de 1,2-époxybutane. Après retour à la température ambiante, le milieu est dilué avec de l'heptane, lavé avec 2 fois 50 g d'eau, puis, après évaporation sous pression réduite de la phase organique, on obtient 335 g d'un liquide limpide jaune pâle, soluble dans l'essence et dont la structure correspond à la formule générale : 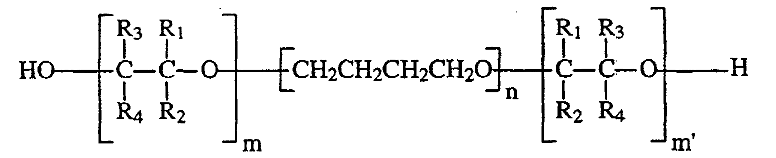 dans laquelle
R1 = R2 = R3 = H ; R4 = -CH2-CH3 ;
n _{moyen} = 3,5 et (m+m') _{moyen} = 20.

### Exemple 4

Dans un réacteur permettant d'opérer sous pression, équipé d'un système d'agitation, d'un système d'introduction de réactifs, d'un système de mesure de la température et de la pression, on introduit 50 g d'un polytétrahydrofuranne de masse molaire moyenne égale à 250 et 0,2 g d'hydrure de sodium. Après avoir purgé, sous agitation, le réacteur de l'hydrogène dégagé, on introduit 125,8 g (1,74 mole) de 1-2 époxybutane et 54,2 g de 1 2 époxydodécane (0,29 mole). On porte progressivement le milieu à la température de 145 °C et on le maintient à cette température pendant 5 heures. Après retour à la température ambiante, le milieu est dilué avec de l'heptane, lavé avec 2 fois 50 g d'eau, puis, après évaporation sous pression réduite de la phase organique, on obtient 212 g d'un liquide limpide jaune pâle, soluble dans l'essence et dont la structure correspond à la formule générale : 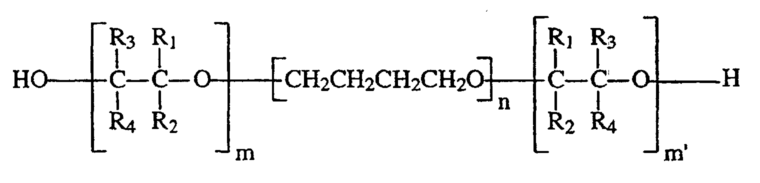 dans laquelle
R1 = R2 = R3= H ; R4 = -CH2-CH3 et -(CH2)₉-CH3 ;
n _{moyen} = 3,5 et (m+m') _{moyen} = 10

### Exemple 5

Les produits préparés dans les exemples précédents sont évalués comme additifs pour leurs propriétés détergentes à une concentration de 400 mg/litre dans une essence sans plomb d'indice d'octane "Recherche" de 96,8 et dont les caractéristiques sont les suivantes ;

| | |
|---|---|
| Masse volumique à 15 °C | 753,9 kg/m3 |
| Pression de Vapeur Reid | 60,2 kPa |
| Teneur en plomb | < 2 mg/l |
| Distillation | |
| Point initial | 33,0 °C |
| 5 % | 45,9 °C |
| 10% | 51,2 °C |
| 20 % | 61,1 °C |
| 30 % | 73,1 °C |
| 40 % | 88,3 °C |
| 50 % | 104,2 °C |
| 60 % | 116,0 °C |
| 70 % | 125,6 °C |
| 80 % | 138,5 °C |
| 90 % | 155,6 °C |
| 95 % | 169,8 °C |
| Point final | 189,0 °C |

L'évaluation est effectuée au moyen d'un essai sur moteur Mercedes M102E selon la méthode CEC-F-05-A-93 La durée de cet essai est de 60 heures. Cette méthode permet d'évaluer la quantité de dépôts formés sur les soupapes d'admission du moteur.

Les résultats qui figurent dans le tableau suivant montrent l'effet des produits de l'invention pour réduire les dépôts sur les soupapes d'admission.

**TABLEAU**

| Additif | Teneur (mg/l) | Masse de dépôt sur les soupapes d'admission (mg) | | | | |
|---|---|---|---|---|---|---|
| | | Soupape 1 | Soupape 2 | Soupape 3 | Soupape 4 | Moyenne |
| Néant | 0 | 241 | 275 | 272 | 312 | 275 |
| Produit de l'Exemple 1 | 400 | 70 | 57 | 76 | 65 | 67 |
| Produit de l'Exemple 4 | 400 | 43 | 6 | 17 | 4 | 17,5 |

## Revendications

1. Composition d'additif détergent pour carburant de type essence **caractérisée en ce qu'**elle comprend au moins un composé de formule générale (I) : 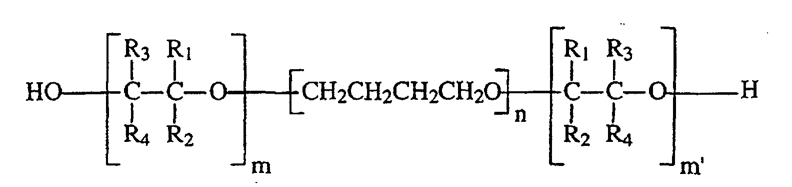 dans laquelle R1, R2, R3 et R4, représentent chacun un atome d'hydrogène ou un radical hydrocarboné l'un au moins des R1, R2, R3 et R4 étant un radical hydrocarboné ; n est un nombre de 1 à 20, m et m' sont chacun un nombre de 1 à 30, avec m + m' de 4 à 60.

2. Composition selon la revendication 1 **caractérisée en ce que**, dans la formule générale (I) dudit composé, les enchaînements : 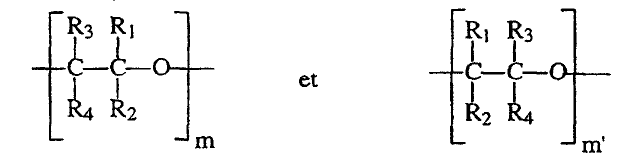 sont constitués respectivement de motifs : 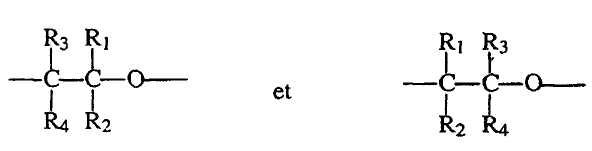 qui diffèrent entre eux par la nature de R1, R2, R3 et/ou R4.

3. Composition selon la revendication 1 ou 2 **caractérisée en ce que**, dans la formule générale (I) dudit composé, n est un nombre de 1 à 10, m et m' sont chacun un nombre de 1 à 20, avec m + m' de 5 à 30.

4. Composition selon l'une des revendications 1 à 3, **caractérisée en ce que** dans la formule générale (I) dudit composé, les radicaux hydrocarbonés R1, R2, R3, et R4 sont des radicaux alkyles de 1 à 30 atomes de carbone.

5. Composition selon l'une des revendications 1 à 4, **caractérisée en ce qu'**elle comprend un mélange de plusieurs composés qui diffèrent les uns des autres par les valeurs de n, m et/ou m' et/ou par la nature d'au moins un des radicaux R1 à R4.

6. Composition de carburant de type essence **caractérisée en ce qu'**elle comprend à titre d'additif détergent au moins une composition selon l'une des revendications 1 à 5.

7. Composition selon la revendication 6 **caractérisée en ce que** ladite composition d'additif détergent est présente à une concentration de 20 à 5000 mg/litre.

8. Composition selon l'une des revendications 6 et 7 **caractérisée en ce que** ladite composition d'additif détergent est utilisée en mélange avec tout autre composé détergent.

## Patentansprüche

1. Zusammensetzung eines Detergenzzusatzes für einen Benzintreibstoff, **dadurch gekennzeichnet, dass** sie wenigstens eine Verbindung einer allgemeinen Formel (I): 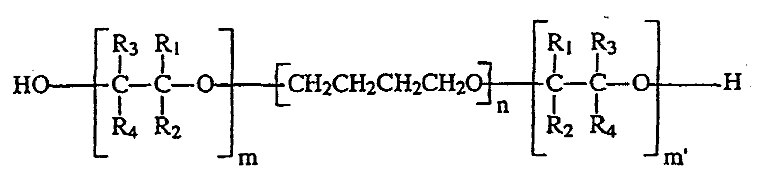 enthält, in der R1, R2, R3 und R4 jedes ein Wasserstoffatom oder ein Kohlenwasserstoffradikal darstellen, wobei wenigstens einer der R1, R2, R3 und R4 ein Kohlehwasserstoffradikal ist; n eine Zahl von 1 bis 20 ist, m und m' jedes einer Zahl von 1 bis 30 sind, mit m + m' von 4 bis 60.

2. Zusammensetzung nach Anspruch 1, **dadurch gekennzeichnet, dass** in der allgemeinen Formel (I) der Verbindung die Ketten: 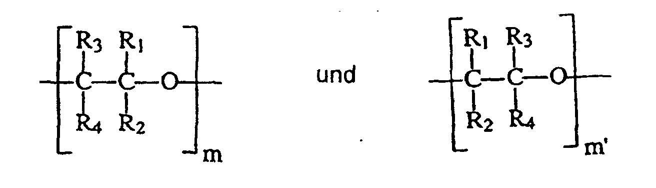 jeweils aus Motiven bestehen: 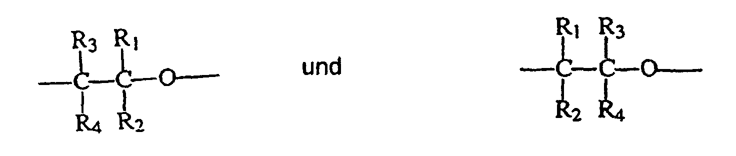 welche untereinander durch die Natur der R1, R2 und R3 und/oder R4 differieren.

3. Zusammensetzung nach Anspruch 1 oder 2, **dadurch gekennzeichnet, dass** in der allgemeinen Formel (I) der Verbindung n eine Zahl von 1 bis 10 ist, m und m' jeweils eine Zahl von 1 bis 20 sind, mit m+m' von 5 bis 30.

4. Zusammensetzung nach einem der Ansprüche 1 bis 3, **dadurch gekennzeichnet, dass** in der allgemeinen Formel (I) der Verbindung die Kohlenwasserstoffradikale R1, R2, R3 und R4 Alkylradikale mit 1 bis 30 Kohlenwasserstoffatomen sind.

5. Zusammensetzung nach einem der Ansprüche 1 bis 4, **dadurch gekennzeichnet, dass** sie je ein Gemisch von mehreren Verbindungen umfasst, welche sich voneinander durch die Werte von n, m und/oder m' und/oder durch die Natur wenigstens eines der Radikale R1 bis R4 unterscheiden.

6. Zusammensetzung eines Benzintreibstoffs, **dadurch gekennzeichnet, dass** sie als Detergenzzusatz wenigstens eine Zusammensetzung nach einem der Ansprüche 1 bis 5 umfasst.

7. Zusammensetzung nach Anspruch 6, **dadurch gekennzeichnet, dass** die Detergenzzusatzzusammensetzung bei einer Konzentration von 20 bis 50000 mg/Liter vorliegt.

8. Zusammensetzung nach einem der Ansprüche 6 und 7 **dadurch gekennzeichnet, dass** die Zusammensetzung eines Detergenzzusatzes im Gemisch mit irgendeiner anderen Detergenzverbindung verwendet wird.

## Claims

1. Detergent additive composition for gasoline-type fuel, **characterized in that** it comprises at least one compound of general formula (I): 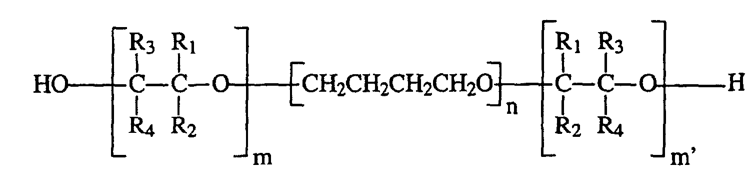 in which R1, R2, R3, and R4 each represent a hydrogen atom or a hydrocarbon radical, whereby at least one of R1, R2, R3, and R4 is a hydrocarbon radical; n is a number from 1 to 20; and m and m' are each a number from 1 to 30, with m + m' from 4 to 60.

2. Composition according to claim 1, wherein in general formula (I) of said compound, the concatenations: 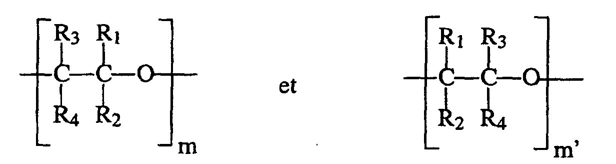 consist respectively of patterns: 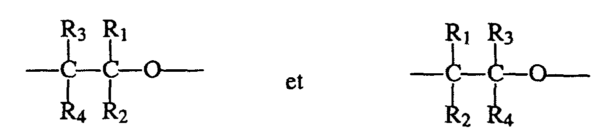 that differ from one another by the nature of R1, R2, R3 and/or R4.

3. Composition according to claim 1 or 2, wherein in general formula (I) of said compound, n is a number from 1 to 10, m and m' are each a number from 1 to 20, with m + m' from 5 to 30.

4. Composition according to one of claims 1 to 3, wherein in general formula (I) of said compound, hydrocarbon radicals R1, R2, R3 and R4 are alkyl radicals with 1 to 30 carbon atoms.

5. Composition according to one of claims 1 to 4, wherein it comprises a mixture of several compounds that differ from one another by the values of n, m and/or m' and/or by the nature of at least one of radicals R1 to R4.

6. Composition of gasoline-type fuel, wherein it comprises as detergent additive at least one composition according to one of claims 1 to 5.

7. Composition according to claim 6, wherein said detergent additive composition is present at a concentration of 20 to 5000 mg/liter.

8. Composition according to one of claims 6 and 7, wherein said detergent additive composition is used in a mixture with any other detergent compound.
